# EUROPEAN PATENT SPECIFICATION

(11) **EP 4 293 439 B1**
(45) Date of publication and mention of the grant of the patent: **18.03.2026**
(21) Application number: 22178696.5
(22) Date of filing: 13.06.2022
(51) Int. Cl.: G05B 19/042

(54) **SYNCHRONIZING FIELD DEVICE PARAMETERS BETWEEN AN ASSET MANAGEMENT SYSTEM AND FIELD DEVICES**
SYNCHRONISIEREN VON FELDGERÄTEPARAMETERN ZWISCHEN EINEM ASSET-MANAGEMENT-SYSTEM UND FELDGERÄTEN
SYNCHRONISATION DE PARAMÈTRES DE DISPOSITIF DE CHAMP ENTRE UN SYSTÈME DE GESTION DES ACTIFS ET DES DISPOSITIFS DE CHAMP

(43) Date of publication of application: 20.12.2023
(73) Proprietor: ABB SCHWEIZ AG, 5400 Baden (CH)
(72) Inventor: WAGENER, Dirk, 31655 Stadthagen (DE); HEEGE, Marcus, 56759 Kaisersesch (DE); WELTE, Christoph, 89233 Neu-Ulm (DE)
(74) Representative: Maiwald GmbH

(56) References cited:
- EP-A1- 3 279 747
- EP-A2- 2 575 116
- EP-A2- 3 065 010
- US-A1- 2011 047 300
- US-A1- 2018 356 801
- US-A1- 2022 121 175

## Description

### FIELD OF THE INVENTION

The invention relates to the configuration of field devices for industrial plants in which an asset management system, AMS, for field devices is in place.

### BACKGROUND

Industrial plants for executing industrial processes comprise a plurality of field devices that are connected to a distributed control system, DCS, via a network of the industrial plant. Field devices need to be configured before they can perform their intended function in the industrial plant. WO 2021/249 655 A1 discloses a method to configure a field device based on an OPC UA server of an already configured field device of the same type.

In larger industrial plants, an asset management system is in place to manage and configure field devices. In particular, such an AMS maintains values of field device parameters that are written to field devices. Changes to the field device parameters are to be entered into the AMS and then propagated to the field devices.

However, field device parameters can also be changed on the field device itself, via a keypad or touchscreen on the field device or via a handheld programming device. Such changes need to be entered manually into the AMS, so that they are not overwritten the next time the AMS sends field device parameter values to the field device.

EP 3 065 010 A2 discloses a field device commissioning system that retrieves first configuration parameter values from field devices, determines second configuration parameter values for the field devices from engineering data retrieved from a repository, and generates an alert if the first and second configuration parameter values do not match.

EP 3 279 747 A1 discloses a method for automatically updating data associated with a wind turbine based on component self identification. One or more parameters associated with operating the wind turbine may be updated based on any differences identified between the current configuration data and last-known configuration data.

US 2011/047 300 A1 discloses a method for automatic configuration parameter monitoring for wind energy installations. A nominal configuration parameter set is automatically generated and stored in a database. This is compared to an actual configuration parameter set, and a warning is outputted in the event of discrepancies.

EP 2 575 116 A2 discloses a setting system of field devices that uses multiple communication paths between field devices on the one hand and a terminal device on the other hand.

### OBJECTIVE OF THE INVENTION

It is the objective of the present invention to improve the co-existence of an asset management system on the one hand, and the possibility to change field device parameters on the field device itself on the other hand.

This objective is achieved by the method according to the main claim. Further advantageous embodiments are detailed in the dependent claims.

### DISCLOSURE OF THE INVENTION

The invention is defined by the appended claims. Embodiments and examples not covered by the claims are presented to illustrate, and facilitate the understanding of, the claimed invention.

The invention provides a computer-implemented method for operating at least one field device that is managed by an asset management system, AMS. For example, a Field Information Manager, FIM, may configure field devices via communication protocols such as HART; Fieldbus Foundation, Profibus or ProfiNet, based on Electronic Device Descriptions, EDD, or FDI Device Packages.

In the course of the method, an initial alignment between a set of values of field device parameters maintained by the AMS and values of these parameters on the field device is established. At a later time, it is checked whether the configuration of the field device has changed since the initial alignment. If this is the case, the alignment between the set of values of field device parameters maintained by the AMS and the values of these parameters on the field device is re-established. For example, this may entail propagating values from the AMS to the field device, and/or propagating values from the field device to the AMS.

The field device parameters may comprise any parameters that govern the operation of the field device. For example, the field device parameters may comprise states of switches or valves that the field device is to enact in an industrial process in which it is participating, and/or a set-point of at least one quantity (such as a temperature or a pressure). For example, it may be the job of the field device to act on the industrial process in a manner that said at least one quantity is kept near its set-point value.

By means of the proposed method, the advantages of the management by the AMS may be combined with the advantages of the possibility to change field device parameters directly on the field device itself, e.g., via a keypad or a touchscreen of the field device, or with a handheld device that is in short-range radio or optical communication with the field device.

The centralized management saves time when managing very many field devices. In particular, existing sets of parameters may be re-used at least partially when a new field device is to be integrated into the industrial plant, and/or when an old field device is to be exchanged for a new one.

On the other hand, there are legitimate reasons why one should want to change field device parameters on the field device itself. For example, it may be desirable to directly observe the effect that the changing of a field device parameter has on the plant when troubleshooting a problem in the industrial plant. Therefore, the solution is not to simply lock the possibility to change parameters on the field device itself.

Automatically re-establishing the alignment between the set of values of field device parameters maintained by the AMS and the values of these parameters on the field device can be used to ensure that
- legitimate changes to field device parameters entered on the field device itself are made known to the AMS, such that they may be properly documented, and are also available for being written to a new field device in case of a device exchange;
- unintentional or unauthorized changes can be reversed, such that the field device works as it is expected to work given the values of the field device parameters maintained by the AMS; and
- conflicts between different proposals for one and the same field device parameter are resolved.

In particular, updating values of field device parameters maintained by the AMS with changed values from the field device avoids that the AMS unexpectedly overwrites these changed values with the values maintained by the AMS, which would in turn cause an unexpected behavior of the field device in the industrial process in which it is participating.

In a particularly advantageous embodiment, the establishing of the initial alignment comprises:
- generating and/or accepting, by the AMS, at least one value of at least one field device parameter of the at least one field device as a value maintained by the AMS; and
- setting, by the AMS, the at least one field device parameter on the field device to this value.

That is, the AMS is the source for parameter values, and the field device is the sink. In particular, an initial configuration for a field device that is just being integrated into the industrial plant may be obtained from the AMS very quickly, as much of the needed information is likely to be known in connection with other field devices.

Alternatively or in combination, the establishing of the initial alignment may comprise downloading at least one value of at least one parameter from the field device to the AMS. In particular, in this manner, a snapshot of an existing configuration of the field device may be created.

Both sources for parameter values may be combined. For example, the set of field device parameters may comprise a first subset of parameters that may be set from the AMS, and a second subset of parameters that may need fine-tuning on the field device itself. The AMS can then keep the parameter values for parameters from the first subset, and download the parameter values for parameters from the second subset.

According to the invention, the establishing of the initial alignment further comprises receiving, by the AMS, from the field device, a value of a configuration version identifier, and/or a hash value, that identifies the configuration of the field device. The checking whether the configuration of the field device has changed then comprises
- receiving, by the AMS, from the field device, a new value of the configuration version identifier, and/or a new hash value; and
- comparing this new value of the configuration version identifier, and/or this new hash value, to the corresponding value obtained at the time of initial alignment.

For example, as a de-facto standard, many field devices keep a configuration change counter that is incremented whenever a parameter of the field device is changed, whether this happens in response to a command from the AMS or in response to direct entry of the changed values on the field device itself. If the value of such a counter as configuration version identifier is stored at the time where the initial alignment is established, and the field device still returns the same counter value later, it can be reasonably assumed that the configuration of the field device has not changed. Communication protocols for attaching field devices to industrial plants have standard commands for querying the counter value.

Hash values are an even better way than counters to guarantee that the configuration of the field device is still the same as at the time of the initial alignment. Since every field device can calculate its hash value on its own, there is no additional burden for the calculation on the AMS.

Comparing "fingerprints" of the field device configuration in the form of counter values and/or hash values may be performed faster than comparing all individual values maintained by the AMS with their corresponding values on the field device. In particular, the volume of data that needs to be transferred from the field device to the AMS is a lot less than the volume of the complete set of field device parameters. A single field device may have up to about 1000 parameters. Therefore, at least for the case where the configuration of the field device has not been changed, transmission of a lot of data may be saved.

In combination to this, the checking whether the configuration of the field device has changed may comprise:
- receiving, by the AMS, from the field device, for each field device parameter maintained by the AMS, a current value; and
- comparing the current value to the value maintained by the AMS.

Compared with the configuration version identifier and/or hash code, this is a lot more data to convey from the field device to the AMS. But if it turns out that there is at least one difference between a field device parameter value on the field device and the corresponding value in the AMS, then all current values will have to be downloaded from the field device to the AMS anyway to check whether there are more differences.

The checking whether the configuration of the field device has changed since the initial agreement may be triggered automatically according to any suitable schedule. Alternatively or in combination to this, the checking may be performed as a random spot check. For example, a list of all available field devices may be permutated into a random or pseudorandom order, and the field devices are checked one by one in the order in which they appear on this list, according to a periodic schedule. This uses less communication bandwidth on a network between the AMS and the field devices than checking the configurations of all field devices at the same time. Checks may also be triggered manually, and/or in response to detecting a predetermined event in the industrial plant.

In addition to re-establishing the alignment between the set of values of field device parameters maintained by the AMS and the values of these parameters on the field device, a detected change in parameters on the field device may be reported in any suitable manner to an operator of the AMS and/or of the industrial plant, such as by e-mail.

In a particularly advantageous embodiment, the re-establishing of the alignment comprises:
- updating at least one value of a field device parameter maintained by the AMS with a value received from the field device; and/or
- setting at least one field device parameter on the field device to a value maintained by the AMS.

That is, both the AMS and the field device may share information in both directions, such that, in the end, they both have the same mixture of parameters that originated in the AMS and parameters that were set directly on the field device itself.

The decision whether, for a particular field device parameter, the value currently present on the field device or the value or the value maintained by the AMS shall prevail may be made according to any suitable method, algorithm or scheme. Also, wherever there is a conflict between a value maintained by the AMS and a value currently present on the field device, an operator of the AMS, and/or of the industrial plant, may be prompted for a decision.

In particular, in response to determining that a value of a field device parameter maintained by the AMS differs from the value of this field device parameter on the field device, it may be determined, based on a ruleset, whether to update the value maintained by the AMS or to set the parameter on the field device to the value maintained by the AMS. For example, according to this ruleset, the decision whether to keep the parameter value from the AMS or the parameter value from the field device may be based at least in part on how likely it is that the parameter value will have to be legitimately set on the field device itself.

In a further particularly advantageous embodiment, out of a set of field device parameters for which a value is maintained by the AMS, the ruleset designates
- at least one "AMS-first" subset of field device parameters whose values are to be updated in the AMS, and/or
- at least one "device-first" subset of field device parameters that are to be set on the field device to the values maintained by the AMS.

For example, field device parameters that mainly pertain to the configuration of the user interface on the field device itself, such as the font size or brightness of a touch screen of the field device, may be allocated to the "device-first" subset. On the other hand, field device parameters that require an intimate knowledge of the industrial process as a whole to set properly, and may cause device or plant damage when set to incorrect values, may be allocated to the "AMS-first" subset. Allocation of field devices to either of the two subsets is a decision that is, to some extent, plant-specific.

Alternatively or in combination to this, the ruleset may stipulate that at least one value of a field device parameter is to be
- updated in the AMS if a changed value on the field device is approved by an authorized user, and
- set on the field device to the value maintained by the AMS if a changed value on the field device is not approved by an authorized user.

In this manner, legitimate changes to field device parameters may be entered by an authorized and qualified user on the field device itself. But accidental or even malicious changes (tampering) will not persist. If a user is not authorized to change values on the field device itself, one option is to authorize him to change the values in the AMS instead. The AMS may provide more functionality for plausibility checks of the inputted changes, so that, e.g., a lesser-experienced user may be prevented from making certain mistakes. E.g., while a dial for a field device parameter on a user interface may admit any value that the field device supports on its own, the composition of the industrial plant as a whole may impose boundary conditions on that field device parameter, so that only a certain interval of values is in fact available.

In a further particularly advantageous embodiment, the updating of a value of a field device parameter is logged to an audit trail. In certain regulated industries, all events that are material to the production process must be logged, so as to have a gap-less "chain of custody" regarding product quality, and/or use of certain controlled substances. For example, when processing radioactive materials or narcotics, every milligram must be accounted for. Previously, only configuration changes initiated by the AMS were logged, whereas configuration changes initiated on the field device itself manually were not accounted for. Now that those changes can be propagated from the field device into the AMS, they can be logged as well, so that the audit trail becomes more complete.

In a further advantageous embodiment, at least one field device parameter is referenced by a semantic identifier in the AMS. In the context of the method proposed here, the semantic identifier facilitates the establishing of rules for the ruleset as to whether a value maintained by the AMS or a value on the field device shall prevail if there is any difference or conflict regarding a particular field device parameter.

In a further particularly advantageous embodiment, a field device that physically interacts with an industrial process for the manufacture of a food, a beverage, or a medicament is chosen. In these industries, it is also particularly important to keep an audit trail for any events that are material to product quality.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for operating at least one field device 3;
Figure 2: Illustration of the merging of new values 3a of field device parameters from the field device 3 with values 2a of field device parameters maintained by the AMS 2.

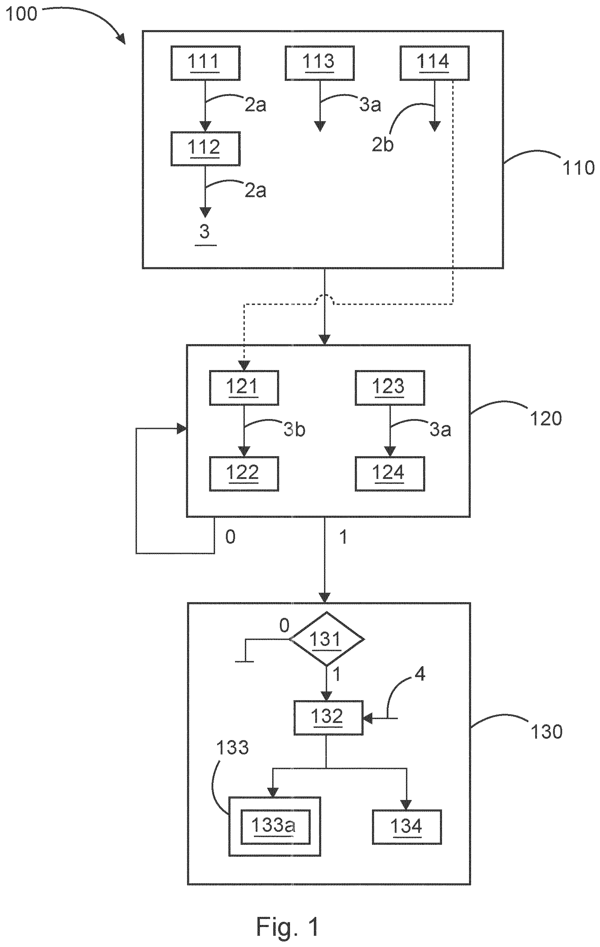

Figure 1 is a schematic flow chart of an exemplary embodiment of the method 100 for operating at least one field device.

In step 110, an initial alignment is established between a set of values 2a of field device parameters maintained by the AMS 2 and values 3a of these parameters on the field device 3.

According to block 111, the AMS 2 may generate, and/or accept, at least one value of at least one field device parameter of the at least one field device 3 as a value 2a maintained by the AMS 2. For example, an operator of the AMS 2 may set these values 2a, and/or the AMS 2 may generate these values 2a by any suitable algorithm that may, e.g., comprise logic of the industrial process in which the field device 3 is participating.

According to block 112, the AMS 2 may then set the at least one field device parameter on the field device to the value 2a maintained by the AMS 2.

According to block 113, at least one value 3a of at least one parameter may be downloaded from the field device 3 to the AMS 2.

According to block 114, when establishing the initial alignment, the AMS 2 may receive, from the field device 3, a value 2b of a configuration version identifier, and/or a hash value, that identifies the configuration of the field device 3.

In step 120, it is checked whether the configuration of the field device 3 has changed since the initial alignment.

According to block 121, the AMS may receive a new value 3b of the configuration version identifier, and/or a new hash value, from the field device 3. This new value 3b may then, according to block 122, be compared to the corresponding value 2b obtained at the time of initial alignment.

According to block 123, for each field device parameter 2a maintained by the AMS 2, the AMS 2 may receive a current value 3a from the field device 3. According to block 124, this current value 3a may then be compared to the value 2a maintained by the AMS 2.

The result of the checking step 120 is binary. If the configuration of the field device 3 has not changed since the initial alignment (truth value 0), the checking step 120 is repeated when triggered again by a schedule, by an event or manually.

If the configuration of the field device 3 has changed since the initial agreement (truth value 1), in step 130, alignment between the set of values 2a of field device parameters maintained by the AMS 2 and the values 3a of these parameters on the field device 3 is re-established by synchronizing values of field device parameters between the AMS 2 and the field device 3.

In particular, according to block 131, it may be determined for each value 2a of a field device parameter maintained by the AMS 2 whether this value 2a differs from the value 3a of this field device parameter on the field device 3. If this is the case (truth value 1), according to block 132, it may be determined, based on a ruleset 4, whether to
- update, according to block 133, at least one value 2a of a field device parameter maintained by the AMS 2 with a value 3a received from the field device 3, or
- set, according to block 134, the at least one field device parameter on the field device 3 to the value 2a maintained by the AMS 2.

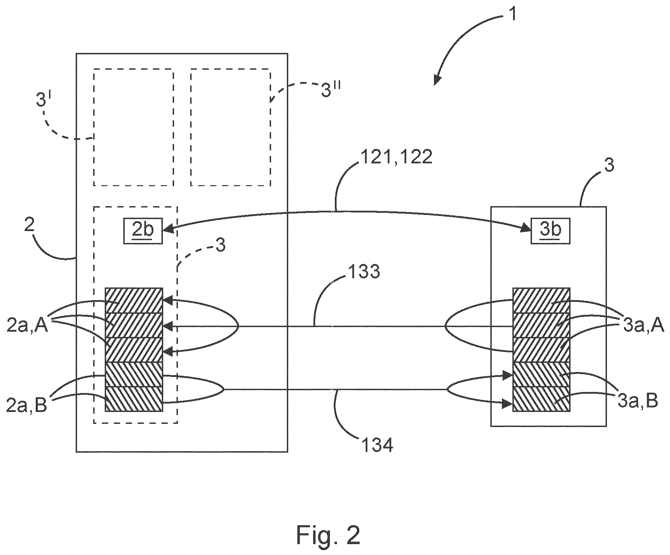

Figure 2 illustrates how field device parameter values 2a maintained by the AMS 2 may be merged with new parameter values 3a that were changed directly on the field device 3, such that, if the initial alignment between the configuration of the field device 3 and its "digital twin" in the AMS 2 is lost, the alignment can be re-established. The field device 3 and the AMS 2 are part of an industrial plant 1.

In the example shown in Figure 2, the field device 3 has three parameters belonging to a first subset A of field device parameters where, in case of a conflict with the AMS 2, the values 3a on the field device 3 shall prevail. The field device 3 has two more parameters belonging to a second subset B of field device parameters where, in case of a conflict with the AMS 2, the values 2a maintained by the AMS shall prevail.

The field device 3 maintains a value 3b of a configuration version identifier that is incremented whenever a change is made to the values 3a of field device parameters on the field device 3.

The AMS 2 comprises a "digital twin" of the configuration of the field device 3 that is exemplarily shown in Figure 2, and also further "digital twins" of the configurations of further field devices 3' and 3".

At the time of establishing the initial alignment between the values 2a of field device parameters maintained by the AMS 2 on the one hand, and the values 3a of these field device parameters on the field device 3 on the other hand, the value 3b of the configuration version identifier (such as a counter) received from the field device 3 is stored as value 2b in the AMS 2.

According to blocks 121 and 122 of the method 100, it may later be checked whether the current value 3b of the configuration version identifier 3b is still equal to the corresponding value 2b stored in the AMS 2 at the time of the initial alignment. If there is no more alignment, the alignment is re-established by
- updating, according to block 133, the values 2a maintained in the AMS 2 of field device parameters belonging to the first subset A with current values 3a received from the field device 3, and
- setting, according to block 134, the values 3a of field device parameters on the field device 3 belonging to the second subset B to the values 2a maintained by the AMS 2.

### List of reference signs:

- 1: industrial plant
- 2: asset management system, AMS
- 2a: field device parameter value, maintained by AMS 2
- 2b: configuration version identifier, stored in AMS 2
- 3, 3', 3": field device
- 3a: field device parameter value, active on field device 3
- 3b: configuration version identifier, obtained from field device 3
- 4: ruleset for merging parameter values 2a, 3a
- 100: method for operating field device 3
- 110: establishing initial alignment between field device 3 and AMS 2
- 111: generating and/or accepting field device parameter value 2a
- 112: setting field device parameter to value 2a
- 113: downloading parameter value 3a from field device 3
- 114: receiving configuration version identifier 2a
- 120: checking whether configuration of field device 3 has changed
- 121: receiving new value 3b of configuration version identifier
- 122: comparing new value 3b with version identifier 2b stored in AMS 2
- 123: receiving current values 3a of parameters from field device 3
- 124: comparing current values 3a to values 2a maintained by AMS 2
- 130: re-establishing alignment between field device 3 and AMS 2
- 131: checking whether parameter value 2a differs from parameter value 3a
- 132: determining which value shall prevail, according to ruleset 4
- 133: updating parameter value 2a with current parameter value 3a
- 134: setting parameter on field device 3 to value 2a from AMS 2
- A: first subset of parameters where field device 3 shall prevail
- B: second subset of parameters where AMS 2 shall prevail

## Claims

1. A computer-implemented method (100) for operating at least one field device (3) that is managed by an asset management system (2), AMS, comprising the steps of:
• establishing (110) an initial alignment between a set of values (2a) of field device parameters maintained by the AMS (2) and values (3a) of these parameters on the field device (3);
• checking (120) whether the configuration of the field device (3) has changed since the initial alignment; and
• in response to determining that the configuration of the field device (3) has changed, re-establishing (130) alignment between the set of values (2a) of field device parameters maintained by the AMS (2) and the values (3a) of these parameters on the field device (3),
**characterized in that**
• the establishing (110) of the initial alignment comprises receiving (114), by the AMS (2), from the field device (3), a value (2b) of a configuration version identifier, and/or a hash value, that identifies the configuration of the field device (3); and
• the checking (120) whether the configuration of the field device (3) has changed comprises:
∘ receiving (121), by the AMS (2), from the field device (3), a new value (3b) of the configuration version identifier, and/or a new hash value; and
∘ comparing (122) this new value (3b) of the configuration version identifier, and/or this new hash value, to the corresponding value (2b) obtained at the time of initial alignment.

2. The method (100) of claim 1, wherein the establishing (110) of the initial alignment comprises:
• generating and/or accepting (111), by the AMS (2), at least one value of at least one field device parameter of the at least one field device (3) as a value (2a) maintained by the AMS (2); and
• setting (112), by the AMS (2), the at least one field device parameter on the field device (3) to this value (2a).

3. The method (100) of any one of claims 1 to 2,
wherein the establishing (110) of the initial alignment comprises: downloading (113) at least one value (3a) of at least one parameter from the field device (3) to the AMS (2).

4. The method (100) of any one of claims 1 to 3,
wherein the checking (120) whether the configuration of the field device (3) has changed comprises:
• receiving (123), by the AMS (2), from the field device (3), for each field device parameter (2a) maintained by the AMS (2), a current value (3a); and
• comparing (124) the current value (3a) to the value (2a) maintained by the AMS (2).

5. The method (100) of any one of claims 1 to 4,
wherein the re-establishing (130) of the alignment comprises:
• updating (133) at least one value (2a) of a field device parameter maintained by the AMS (2) with a value (3a) received from the field device (3); and/or
• setting (134) at least one field device parameter on the field device (3) to a value (2a) maintained by the AMS (2).

6. The method (100) of claim 5, further comprising: in response to determining (131) that a value (2a) of a field device parameter maintained by the AMS (2) differs from the value (3a) of this field device parameter on the field device (3), determining (132), based on a ruleset (4), whether to update (133) the value maintained by the AMS (2) or to set (134) the parameter on the field device (3) to the value (2a) maintained by the AMS (2).

7. The method (100) of claim 6, wherein, out of a set of field device parameters for which a value (2a) is maintained by the AMS (2), the ruleset (4) designates
• at least one subset (A) of field device parameters whose values (2a) are to be updated in the AMS (2), and/or
• at least one subset (B) of field device parameters that are to be set on the field device (3) to the values (2a) maintained by the AMS (2).

8. The method (100) of any one of claims 6 to 7,
wherein the ruleset (4) stipulates that at least one value of a field device parameter is to be
• updated in the AMS (2) if a changed value (3a) on the field device (3) is approved by an authorized user, and
• set on the field device (3) to the value (2a) maintained by the AMS (2) if a changed value (3a) on the field device (3) is not approved by an authorized user.

9. The method (100) of any one of claims 5 to 8, further comprising: logging (133a) the updating (133) of a value (2a) of a field device parameter maintained by the AMS (2) to an audit trail.

10. The method (100) of any one of claims 1 to 9,
wherein at least one field device parameter is referenced by a semantic identifier in the AMS (2).

11. The method (100) of any one of claims 1 to 10,
wherein a field device (3) that physically interacts with an industrial process for the manufacture of a food, a beverage, or a medicament is chosen.

12. A computer program, comprising machine-readable instructions that, when executed by one or more computers and/or compute instances, cause the one or more computers and/or compute instances to perform the method (100) of any one of claims 1 to 11.

13. A machine-readable data carrier, and/or a download product, with the computer program of claim 12.

14. One or more computers and/or compute instances with the computer program of claim 12, and/or with the machine-readable data carrier and/or download product of claim 13.

## Patentansprüche

1. **Computerimplementiertes** Verfahren (100) zum Betreiben mindestens eines Feldgeräts (3), das von einem Asset-Management-System (2), AMS, verwaltet wird, mit den folgenden Schritten:
• Herstellen (110) einer anfänglichen Abstimmung zwischen einem Satz von Werten (2a) von Feldgeräteparametern, die vom AMS (2) verwaltet werden, und Werten (3a) dieser Parameter auf dem Feldgerät (3);
• Überprüfen (120), ob sich die Konfiguration des Feldgeräts (3) seit der anfänglichen Abstimmung geändert hat; und
• in Antwort auf die Feststellung, dass sich die Konfiguration des Feldgeräts (3) geändert hat, erneutes Herstellen (130) einer Abstimmung zwischen dem Satz von Werten (2a) der Feldgeräteparameter, die vom AMS (2) verwaltet werden, und den Werten (3a) dieser Parameter auf dem Feldgerät (3),
**dadurch gekennzeichnet, dass**
• das Herstellen (110) der anfänglichen Abstimmung umfasst, dass das AMS (2) vom Feldgerät (3) einen Wert (2b) einer Konfigurationsversionskennung und/oder einen Hashwert der die Konfiguration des Feldgeräts (3) identifiziert, empfängt (114); und
• das Prüfen (120), ob sich die Konfiguration des Feldgeräts (3) geändert hat, umfasst:
∘ Empfangen (121) eines neuen Werts (3b) der Konfigurationsversionskennung und/oder eines neuen Hashwerts durch das AMS (2) vom Feldgerät (3); und
∘ Vergleichen (122) dieses neuen Werts (3b) der Konfigurationsversionskennung, und/oder dieses neuen Hashwerts, mit dem entsprechenden Wert (2b), der zum Zeitpunkt der anfänglichen Abstimmung erhalten wurde.

2. Verfahren (100) nach Anspruch 1, wobei das Herstellen (110) der anfänglichen Abstimmung umfasst:
• Erzeugen und/oder Akzeptieren (111) mindestens eines Werts mindestens eines Feldgeräteparameters des mindestens einen Feldgeräts (3) durch das AMS (2) als einen vom AMS (2) verwalteten Wert (2a); und
• Setzen (112) des mindestens einen Feldgeräteparameters auf dem Feldgerät (3) auf diesen Wert (2a) durch das AMS (2).

3. Verfahren (100) nach einem der Ansprüche 1 bis 2, wobei das Herstellen (110) der anfänglichen Abstimmung umfasst: Herunterladen (113) mindestens eines Wertes (3a) mindestens eines Parameters von dem Feldgerät (3) auf das AMS (2).

4. Verfahren (100) nach einem der Ansprüche 1 bis 3, wobei das Prüfen (120), ob sich die Konfiguration des Feldgeräts (3) geändert hat, umfasst:
• Empfangen (123) eines aktuellen Werts (3a) für jeden vom AMS (2) verwalteten Feldgeräteparameter (2a) durch das AMS (2) vom Feldgerät (3); und
• Vergleichen (124) des aktuellen Werts (3a) mit dem vom AMS (2) gespeicherten Wert (2a).

5. Verfahren (100) nach einem der Ansprüche 1 bis 4, wobei das Wiederherstellen (130) der Abstimmung umfasst:
• Aktualisieren (133) mindestens eines Wertes (2a) eines vom AMS (2) verwalteten Feldgeräteparameters mit einem vom Feldgerät (3) empfangenen Wert (3a); und/oder
• Setzen (134) mindestens eines Feldgeräteparameters auf dem Feldgerät (3) auf einen vom AMS (2) verwalteten Wert (2a).

6. Verfahren (100) nach Anspruch 5, das ferner umfasst: in Antwort auf die Feststellung (131), dass ein Wert (2a) eines vom AMS (2) verwalteten Feldgeräteparameters vom Wert (3a) dieses Feldgeräteparameters auf dem Feldgerät (3) abweicht, das Bestimmen (132) auf der Grundlage eines Regelsatzes (4), ob der vom AMS (2) verwaltete Wert aktualisiert (133) oder der Parameter auf dem Feldgerät (3) auf den vom AMS (2) verwalteten Wert (2a) gesetzt (134) werden soll.

7. Verfahren (100) nach Anspruch 6, wobei aus einer Menge von Feldgeräteparametern, für die ein Wert (2a) vom AMS (2) verwaltet wird, der Regelsatz (4)
• mindestens eine Teilmenge (A) von Feldgeräteparametern, deren Werte (2a) im AMS (2) aktualisiert werden sollen, und/oder
• mindestens eine Teilmenge (B) von Feldgeräteparametern, die auf dem Feldgerät (3) auf die vom AMS (2) verwalteten Werte (2a) gesetzt werden sollen, angibt.

8. Verfahren (100) nach einem der Ansprüche 6 bis 7, wobei der Regelsatz (4) vorschreibt, dass mindestens ein Wert eines Feldgeräteparameters
• im AMS (2) aktualisiert werden soll, wenn ein geänderter Wert (3a) am Feldgerät (3) von einem autorisierten Benutzer genehmigt wird, und
• auf dem Feldgerät (3) auf den vom AMS (2) verwalteten Wert (2a) gesetzt werden soll, wenn ein geänderter Wert (3a) auf dem Feldgerät (3) nicht von einem autorisierten Benutzer genehmigt wird.

9. Verfahren (100) nach einem der Ansprüche 5 bis 8, weiterhin umfassend: Protokollieren (133a) der Aktualisierung (133) eines Wertes (2a) eines vom AMS (2) verwalteten Feldgeräteparameters in einem Prüfprotokoll.

10. Verfahren (100) nach einem der Ansprüche 1 bis 9, wobei mindestens ein Feldgeräteparameter durch einen semantischen Identifikator im AMS (2) referenziert wird.

11. Verfahren (100) nach einem der Ansprüche 1 bis 10, wobei ein Feldgerät (3) ausgewählt wird, das physikalisch mit einem industriellen Prozess zur Herstellung eines Lebensmittels, eines Getränks oder eines Medikaments interagiert.

12. Computerprogramm, das maschinenlesbare Anweisungen umfasst, die, wenn sie von einem oder mehreren Computern und/oder Compute-Instanzen ausgeführt werden, den einen oder die mehreren Computer und/oder Compute-Instanzen veranlassen, das Verfahren (100) nach einem der Ansprüche 1 bis 11 auszuführen.

13. Maschinenlesbarer Datenträger und/oder ein Download-Produkt mit dem Computerprogramm nach Anspruch 12.

14. Ein oder mehrere Computer und/oder Compute-Instanzen mit dem Computerprogramm nach Anspruch 12, und/oder mit dem maschinenlesbaren Datenträger und/oder Download-Produkt nach Anspruch 13.

## Revendications

1. Procédé (100) mis en œuvre par ordinateur pour faire fonctionner au moins un dispositif (3) de terrain qui est géré par un système (2) de gestion d'actifs, AMS, comprenant les étapes consistant à :
• établir (110) un alignement initial entre un ensemble de valeurs (2a) de paramètres de dispositif de terrain maintenus par l'AMS (2) et des valeurs (3a) de ces paramètres sur le dispositif (3) de terrain ;
• vérifier (120) si la configuration du dispositif (3) de terrain a changé depuis l'alignement initial ; et
• en réponse à une détermination selon laquelle la configuration du dispositif (3) de terrain a changé, rétablir (130) l'alignement entre l'ensemble des valeurs (2a) des paramètres de dispositif de terrain maintenus par l'AMS (2) et les valeurs (3a) de ces paramètres sur le dispositif (3) de terrain,
**caractérisé en ce que**
• l'établissement (110) de l'alignement initial comprend
la réception (114), par l'AMS (2), en provenance du dispositif (3) de terrain, d'une valeur (2b) d'un identifiant de version de configuration, et/ou d'une valeur de hachage, qui identifie la configuration du dispositif (3) de terrain ; et
• le fait de vérifier (120) si la configuration du dispositif (3) de terrain a changé comprend :
∘ la réception (121), par l'AMS (2), en provenance du dispositif (3) de terrain, d'une nouvelle valeur (3b) de l'identifiant de version de configuration, et/ou d'une nouvelle valeur de hachage ; et
∘ la comparaison (122) de cette nouvelle valeur (3b) de l'identifiant de version de configuration, et/ou de cette nouvelle valeur de hachage, à la valeur correspondante (2b) obtenue au moment de l'alignement initial.

2. Procédé (100) selon la revendication 1, l'établissement (110) de l'alignement initial comprenant :
• la génération et/ou l'acceptation (111), par l'AMS (2), d'au moins une valeur d'au moins un paramètre de dispositif de terrain du ou des dispositifs (3) de terrain en tant que valeur (2a) maintenue par l'AMS (2) ; et
• le réglage (112), par l'AMS (2), du ou des paramètres de dispositif de terrain sur le dispositif (3) de terrain à cette valeur (2a).

3. Procédé (100) selon l'une quelconque des revendications 1 à 2, l'établissement (110) de l'alignement initial comprenant : le téléchargement (113) d'au moins une valeur (3a) d'au moins un paramètre depuis le dispositif (3) de terrain vers l'AMS (2).

4. Procédé (100) selon l'une quelconque des revendications 1 à 3, le fait de vérifier (120) si la configuration du dispositif (3) de terrain a changé comprenant :
• la réception (123), par l'AMS (2), en provenance du dispositif (3) de terrain, pour chaque paramètre (2a) de dispositif de terrain maintenu par l'AMS (2), d'une valeur actuelle (3a) ; et
• la comparaison (124) de la valeur actuelle (3a) à la valeur (2a) maintenue par l'AMS (2).

5. Procédé (100) selon l'une quelconque des revendications 1 à 4, le rétablissement (130) de l'alignement comprenant :
• la mise à jour (133) d'au moins une valeur (2a) d'un paramètre de dispositif de terrain maintenu par l'AMS (2) avec une valeur (3a) reçue en provenance du dispositif (3) de terrain ; et/ou
• le réglage (134) d'au moins un paramètre de dispositif de terrain sur le dispositif (3) de terrain à une valeur (2a) maintenue par l'AMS (2).

6. Procédé (100) selon la revendication 5, comprenant en outre : en réponse à la détermination (131) du fait qu'une valeur (2a) d'un paramètre de dispositif de terrain maintenu par l'AMS (2) diffère de la valeur (3a) de ce paramètre de dispositif de terrain sur le dispositif (3) de terrain, le fait de déterminer (132), sur la base d'un ensemble (4) de règles, s'il faut mettre à jour (133) la valeur maintenue par l'AMS (2) ou de régler (134) le paramètre sur le dispositif (3) de terrain à la valeur (2a) maintenue par l'AMS (2).

7. Procédé (100) selon la revendication 6, l'ensemble (4) de règles désignant, parmi un ensemble de paramètres de dispositif de terrain pour lesquels une valeur (2a) est maintenue par l'AMS (2)
• au moins un sous-ensemble (A) de paramètres de dispositif de terrain dont les valeurs (2a) doivent être mises à jour dans l'AMS (2), et/ou
• au moins un sous-ensemble (B) de paramètres de dispositif de terrain qui doivent être réglés sur le dispositif (3) de terrain aux valeurs (2a) maintenues par l'AMS (2).

8. Procédé (100) selon l'une quelconque des revendications 6 à 7, l'ensemble (4) de règles stipulant qu'au moins une valeur d'un paramètre de dispositif de terrain doit être
• mise à jour dans l'AMS (2) si une valeur modifiée (3a) sur le dispositif (3) de terrain est approuvée par un utilisateur autorisé, et
• réglée sur le dispositif (3) de terrain à la valeur (2a) maintenue par l'AMS (2) si une valeur modifiée (3a) sur le dispositif (3) de terrain n'est pas approuvée par un utilisateur autorisé.

9. Procédé (100) selon l'une quelconque des revendications 5 à 8, comprenant en outre : l'enregistrement (133a) de la mise à jour (133) d'une valeur (2a) d'un paramètre de dispositif de terrain maintenu par l'AMS (2) dans une piste d'audit.

10. Procédé (100) selon l'une quelconque des revendications 1 à 9, au moins un paramètre de dispositif de terrain étant référencé par un identifiant sémantique dans l'AMS (2).

11. Procédé (100) selon l'une quelconque des revendications 1 à 10, dans lequel un dispositif (3) de terrain qui interagit physiquement avec un processus industriel pour la fabrication d'un aliment, d'une boisson ou d'un médicament est choisi.

12. Programme informatique comprenant des instructions lisibles par machine qui, lorsqu'elles sont exécutées par un ou plusieurs ordinateurs et/ou instances de calcul, amènent l'ordinateur ou les ordinateurs et/ou l'instance ou les instances de calcul à réaliser le procédé (100) selon l'une quelconque des revendications 1 à 11.

13. Support de données lisible par machine, et/ou produit de téléchargement, comportant le programme informatique selon la revendication 12.

14. Un ou plusieurs ordinateurs et/ou instances de calcul comportant le programme informatique selon la revendication 12, et/ou comportant le support de données lisible par machine ou le produit de téléchargement selon la revendication 13.
